# EUROPÄISCHE PATENTANMELDUNG

(11) **EP 1 411 306 A1**
(43) Veröffentlichungstag der Anmeldung: **21.04.2004**
(21) Anmeldenummer: 03022505.6
(22) Anmeldetag: 02.10.2003
(51) Int. Cl.: F24H 8/00, F23J 11/02

(54) **Kaminrohr mit Kondensateinleitung**

(30) Priorität: 14.10.2002 DE 10247834
(71) Anmelder: ROBERT BOSCH GMBH, 70442 Stuttgart (DE)
(72) Erfinder: Braun, Juergen, 73262 Reichenbach (DE); Knobloch, Rolf, 73230 Kirchheim (DE); Schmitz, Torsten, 74336 Brackenheim (DE); Walker, Hans-Juergen, 16556 Borgsdorf (DE); Willms, Andreas, 15732 Schulzendorf (DE); Wanek, Thomas, 73269 Hochdorf (DE)

(57) **Zusammenfassung**

Es wird ein Kaminrohr (11) zum abgasseitigen Anschluss eines im kondensierenden Betrieb arbeitenden Heizgerätes (14) vorgeschlagen. Das Heizgerät (14) ist mit einer Abgasleitung (15) an ein im Kaminrohr (11) angeordnetes Anschluss-Stück (16) angeschlossen. Das Kaminrohr (11) besitzt neben dem Anschluss-Stück (16) zum Anschließen der Abgasleitung (15) mindestens ein Kondensat-Anschluss-Stück (21), an das eine Kondensatleitung (20) des Heizgerätes (14) anschließbar ist.

## Beschreibung

Die Erfindung geht aus von einem Kaminrohr zum abgasseitigen Anschluss eines im kondensierenden Betrieb arbeitenden Heizgerätes nach dem Oberbegriff des Anspruchs 1.

### Stand der Technik

Bei Heizgeräten, die im kondensierenden Betrieb arbeiten, den sogenannten Brennwertgeräten, entsteht innerhalb des Heizgerätes Kondensat, das gesammelt und über eine Abwasserleitung abgeleitet wird. Dabei wird das Kondensat im Aufstellungsraum des Heizgerätes direkt vom Heizgerät in die Abwasserleitung eingeleitet (DE 199 23 546 A1). Das Abgas kondensiert jedoch auch in der Abgasleitung, so dass Brennwertgeräte an geeignete Abgasleitungen bzw. Kaminrohre, die druckdicht und feuchteunempfindlich sein müssen, anzuschließen sind.

Die Ableitung des im Heizgerät entstehenden Kondensats über Abwasserleitungen bereitet Probleme, wenn im Aufstellungsraum bzw. in der Nähe des Heizgerätes keine Abwasserleitung installiert ist. Dies ist bei bestehenden Gebäuden, vor allem beim Austausch von konventionellen Heizgeräten durch Brennwertgeräte, sehr oft der Fall. Das Verlegen einer Kondensatabflussleitung ist bei bestehenden Geräten vor allem bei bewohnten Wohnungen mit sehr hohem, häufig nicht vertretbarem Aufwand verbunden. Daher ist es im Allgemeinen unwirtschaftlich und sogar unmöglich, in diesen Gebäuden umweltfreundliche Brennwertgeräte zu installieren.

Eine druckdichte, kondensatbeständige Abgasleitung muss bei der Umrüstung auf Brennwerttechnik auf jeden Fall in der Nähe des Heizgerätes installiert sein bzw. werden.

Dies ist zum Beispiel durch den Einbau von entsprechenden Kaminrohren in bestehende Schächte bzw. Schornsteine im Normalfall ohne großen Aufwand möglich.

### Vorteile der Erfindung

Das erfindungsgemäße Kaminrohr mit den kennzeichnenden Merkmalen des Anspruchs 1 hat den Vorteil, dass Heizgeräte, die im kondensierenden Betrieb arbeiten, in Aufstellungsräumen installiert werden können, in denen kein Anschluss an eine Abwasserleitung vorliegt. Darüber hinaus besteht durch die Nutzung des Kaminrohres als kombinierte Abgas-/Kondensatleitung ein geringerer Installationsaufwand.

Durch die Maßnahmen der Unteransprüche sind vorteilhafte Weiterbildungen der Erfindung möglich. Besonders zweckmäßig ist es, ein verschließbares Kondensat-Anschluss-Stück in die Rohrleitung des Kaminrohres an den Stellen, an denen ein Kondensatanschluss erfolgen soll, einzusetzen. Das Kondensat-Anschluss-Stück ist so ausgebildet, dass es vom Kopf des Schachtes her montiert werden kann. Dazu ist das Kondensat-Anschluss-Stück entweder eine Rohrverzweigung mit einer die Wand des Schachtes durchdringbaren, flexiblen und verschließbaren Kondensateinleitung oder ein Rohrstück mit einer verschließbaren Anschlussöffnung, an die ein geeigneter Anschlussadapters für die Kondensatleitung ankoppelbar ist. Die Verbindungsarten des Verschlusses und die Verbindungsart zwischen Kondensat-Anschluss-Stück und Kondensatleitung ist dabei unerheblich.

Die Verwendung eines verschließbaren Kondensat-Anschluss-Stücks bietet den weiteren Vorteil, dass, wenn zum Zeitpunkt der Schachtsanierung in bestimmten Etagen oder Wohnungen noch kein neues Brennwertgerät installiert werden soll, für den späteren Anschluss des Heizgerätes innerhalb des Schachte eine Kondensat-Anschluss-Stück im Kaminrohr vorgesehen werden kann, das bis zum Zeitpunkt das Heizgeräteanschlusses verschlossen bleibt. Dadurch muss in der Etage bzw. Wohnung, in der zum Zeitpunkt der Schachtsanierung noch kein neues Brennwertheizgerät installiert werden soll, das Mauerwerk des Schachtes nicht aufgestemmt werden. Erst zu dem Zeitpunkt, zu dem in dieser Etage bzw. dieser Wohnung ein neues Heizgerät installiert wird, wird das Mauerwerk des Schachtes an der Stelle des verschlossenen Kondensat-Anschluss-Stücks geöffnet. Der Verschluss des Kondensat-Anschluss-Stücks wird entfernt und die Kondensatleitung des Heizgerätes angeschlossen.

Zeichnung

Ausführungsbeispiele der Erfindung sind in der Zeichnung dargestellt und in der nachfolgenden Beschreibung näher erläutert.

Es zeigen
- Figur 1: eine schematische Schnittdarstellung durch ein Gebäude mit an ein eingebautes Kaminrohr angeschlossene Heizgeräte,
- Figur 2: ein erstes Ausführungsbeispiel eines Kondensat-Anschluss-Stücks mit einem entsprechenden Anschlussadapter,
- Figur 3: ein zweites Ausführungsbeispiel eines Kondensat-Anschluss-Stücks mit einem entsprechenden Anschlussadapter sowie die
- Figuren 4 und 5: ein drittes Ausführungsbeispiel eines Kondensat-Anschluss-Stücks.

### Ausführungsbeispiele

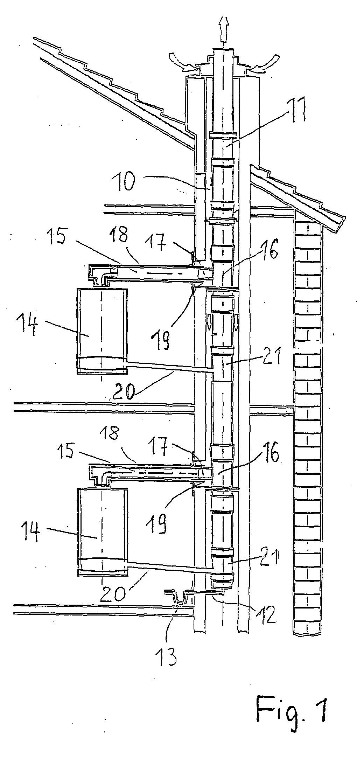

In Figur 1 ist ein Gebäude mit einem Schornstein bzw. Schacht 10 dargestellt, wobei in dem Schacht 10 ein Kaminrohr 11 eingebaut ist. Das Kaminrohr 11 ist aus mehreren Rohrstücken zu einer Rohrleitung zusammengesetzt, wobei die einzelnen Rohrstücke vom Kopf des Schachtes 10 aus vertikal in denselben eingeschoben werden und so das Kaminrohr 11 ergeben. Das Kaminrohr 11 besteht dabei aus einem geeigneten Material, so dass das im Abgas enthaltene Kondensat aufgenommen und abgeleitet werden kann. Als geeignete Materialien sind Edelstahl, Kunststoff oder Aluminium bekannt. Zum Ableiten des Kondenswassers ist an der tiefsten Stelle des Kaminrohres 11 eine Abflussleitung 12 mit einem Siphon 13 angebracht, so dass das Kondenswasser in eine nicht dargestellte Abwasserleitung abgeführt werden kann.

An das Kaminrohr 11 sind Heizgeräte 14 über eine Abgasleitung 15 angeschlossen. Das Kaminrohr 11 weist an den Stellen, an denen ein Heizgerät 14 angeschlossen werden soll, ein Anschluss-Stück 16 mit einem Anschlussflansch 17 auf , wobei die Abgasleitung 15 des Heizgerätes 14 an den Anschlussflansch 17 angeschlossen ist. Im Schacht 10 ist an den Stellen des Anschlussflansches 17 ein Durchbruch 19 vorgesehen, durch den die Abgasleitung 15 geführt und an den Anschlussflansch 17 angeschlossen ist. Im vorliegenden Ausführungsbeispiel ist das Abgasrohr 15 von einem koaxialen Luftzufuhrrohr 18 umgeben, das ebenfalls am Durchbruch 19 an den Schacht 10 angeschlossen ist. Über das Luftzufuhrrohr 18 wird die Verbrennungsluft über den Schacht 10 zum Heizgerät 14 geführt.

Bei den Heizgeräten 14, die im kondensierenden Betrieb betrieben werden, wird das Heizgas unter den Taupunkt abgekühlt und das anfallende Kondensat in einem nicht näher dargestellten Abgassammler innerhalb des Heizgerätes 14 gesammelt. Zum Ableiten des angefallenen Kondensats aus den Heizgerät 14 ist jeweils eine Kondensatableitung 20 vorgesehen.

Die Rohrabschnitte des Kaminrohres 11 besitzen neben den Anschluss-Stücken 17 für die Abgasleitungen 15 beispielsweise für jedes angeschlossene Heizgerät 14 jeweils ein Kondensat-Anschluss-Stück 21, an das die Kondensatleitung 20 des Heizgerätes 14 angeschlossen ist. Das im Heizgerät 14 anfallende Kondenswasser wird dabei über die Kondensatleitung 20 und das Kondensat-Anschluss-Stück 21 in das Kaminrohr 11 eingeleitet. Im druckdichten und feuchteunempfindlichen Kaminrohr 11 wird das Kondenswasser am Boden des Kaminrohres gesammelt. Dort wird das Kondenswasser über die Abflussleitung 12 und den Siphon 13 in die nicht dargestellte Abwasserleitung abgeführt.

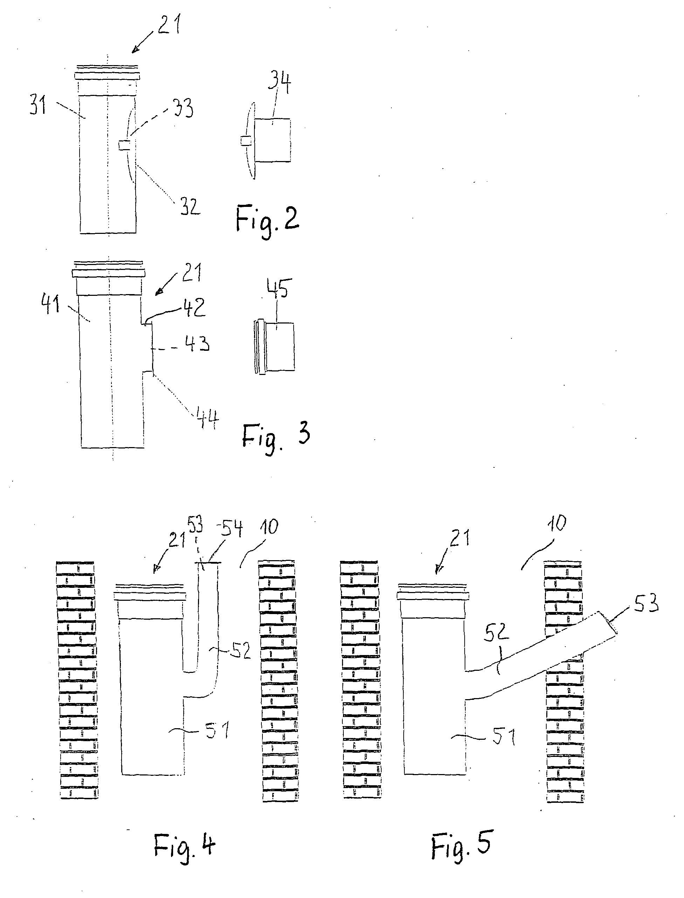

Verschiedene Ausführungsformen für das Kondensat-Anschluss-Stück 21 sind in den Figuren 2 bis 5 dargestellt. Figur 1 zeigt ein Rohrstück 31, das eine mit einem Deckel 32 verschlossenen seitliche Öffnung 33 aufweist. Im nichtangeschlossenen Zustand der Kondensatleitung 20 ist die Öffnung 33 mit dem Deckel 32 verschlossen. Beim Anschließen der Kondensatleitung 20 wird der Deckel 32 entfernt und anstelle des Deckels 32 ein Anschlussadapter 34 druckdicht angebracht. An den Anschlussadapter 33 wird dann die Kondensatleitung 20 angeschlossen.

Bei dem Kondensat-Anschluss-Stück 21 der Figur 2 ist ein T-förmiges Rohrstück 41 mit einem seitlichen Flanschstück 42 vorgesehen, das eine verschließbare Rohröffnung 43 aufweist. Die Rohröffnung 43 ist im nichtangeschlossenen Zustand der Kondensatleitung 20 mit einem Verschluss 44, beispielsweise einer Verschlussfolie, verschlossen. Dabei ist es unerheblich, ob der Verschluss 44 geklebt, geschweißt, durch verschrauben mittels eines Schraubdeckels oder mit Spannbändern oder Spannvorrichtungen hergestellt wird.

Zum Anschließen der Kondensatleitung 20 wird der Verschluss 44 entfernt und ein entsprechender Anschlussadapter 45 an das Flanschstück 42 angeflanscht, wobei der Anschlussadapter 45 mit der Kondensatleitung 20 verbunden wird.

Ein weiteres Ausführungsbeispiel eines Kondensat-Anschluss-Stücks 21 geht aus den Figuren 4 und 5 hervor. Figur 4 zeigt ein Rohrverzweigung 51 mit einer seitlich abzweigenden Kondensateinleitung 52, die am anschlussseitigen Ende eine Öffnung 53 aufweist. Die Öffnung 53 ist mittels eines geeigneten Verschlusses 54 verschließbar. Die abzweigende Kondensateinleitung 52 ist dabei flexibel ausgeführt. Die flexible Ausführung kann dabei mittels eines flexiblen Edelstahlwellrohres oder mittels eines eingesetzten flexiblen Schlauchstücks, an das ein Endrohrstück angesetzt wird, ausgeführt sein. Gemäß Figur 4 ist die Rohrverzweigung 51 in den Schacht 10 eingesetzt und die Kondensateinleitung 52 nicht durch die Wand des Schachtes 10 geführt. Dabei ist auf Grund der Flexibilität die Kondensateinleitung 52 zumindest weitgehende senkrecht nach oben ausgerichtet. Die Öffnung 53 der Kondensateinleitung 52 ist in diesem Einbauzustand zweckmäßigerweise mit einem lösbaren Verschluss 54 verschlossen. In diesem Zustand ist das Rohrstück 51 mit den anderen Rohrabstücken vom Kopf des Schachtes 10 aus in denselben einsetzbar. Die Figur 5 zeigt das Rohrstück 51 in einem installierten Zustand, bei dem die Kondensateinleitung 52 durch die Wand des Schachtes 10 hindurch geführt ist. An die außerhalb des Schachtes 10 zugängliche Öffnung 53 der Kondensateinleitung 52 wird dann die Kondensatleitung 20 des Heizgerätes 14 angeschlossen.

## Patentansprüche

1. Kaminrohr zum abgasseitigen Anschluss eines im kondensierenden Betrieb arbeitenden Heizgerätes, wobei das Heizgerät eine Kondensatleitung aufweist, über die das anfallende Kondensat aus dem Heizgerät abgeleitet wird, **dadurch gekennzeichnet, dass** die Kondensatleitung (20) des Heizgerätes (14) an das Kaminrohr (11) anschließbar ist.

2. Kaminrohr nach Anspruch 1, **dadurch gekennzeichnet, dass** das Kaminrohr (11) mindestens ein Kondensat-Anschluss-Stück (21) aufweist, an das die Kondensatleitung (20) anschließbar ist.

3. Kaminrohr nach Anspruch 2, **dadurch gekennzeichnet, dass** das Kondensat-Anschluss-Stück (21) eine mit einem Verschluss (32, 44, 54) verschließbare Öffnung (33, 43, 53) aufweist und dass nach Entfernen des Verschlusses (32, 44, 54) die Kondensatleitung (20) an die Öffnung (33, 43, 53) anschließbar ist.

4. Kaminrohr nach Anspruch 2 oder 3, **dadurch gekennzeichnet, dass** das Kondensat-Anschluss-Stück (21) mit einer flexiblen Kondensateinleitung (52) ausgeführt ist, an die die Kondensatleitung (20) anschließbar ist.

5. Kaminrohr nach Anspruch 4, **dadurch gekennzeichnet, dass** die verschließbare Öffnung (53) an der Kondensateinleitung (52) ausgebildet ist.

6. Kaminrohr nach Anspruch 2 oder 3, **dadurch gekennzeichnet, dass** das Kondensat-Anschluss-Stück (21) ein Rohrstück (31, 41) mit einer die verschließbare Öffnung (33, 43) ausbildenden seitlichen Anschlussöffnung ist.

7. Kaminrohr nach Anspruch 6, **dadurch gekennzeichnet, dass** an die Anschlussöffnung (32, 43) ein Anschlussadapter (33, 44) anschließbar ist, an den die Kondensatleitung (20) angeschlossen wird.
